# EUROPEAN PATENT APPLICATION

(11) **EP 1 986 308 A1**
(43) Date of publication of application: **29.10.2008**
(21) Application number: 08075308.0
(22) Date of filing: 21.04.2008
(51) Int. Cl.: H02K 7/11, H02K 49/02

(54) **Apparatus with multiple-disk clutch and foucault coupling or transmitting the movement to driven shafts**

(30) Priority: 26.04.2007 IT MI20070864
(71) Applicant: Baruffaldi S.p.A., 20067 Tribiano MI (IT)
(72) Inventor: Boffelli, Piercarlo, 20067 Tribiano (MO) (IT); Bellotti, Claudio, 20067 Tribiano (MO) (IT); Depoli, Erminio, 20067 Tribiano (MO) (IT); Natale, Fabio, 20067 Tribiano (MO) (IT)
(74) Representative: Raimondi, Margherita

(57) **Abstract**

Apparatus for transmitting the movement from movement generating means (111) to a driven shaft (800) mounted idle on a bearing (1b), comprising a clutch (700) with multiple disks (712a,712b), arranged between the driving part (111) and the driven shaft (801), and an eddy current or Foucault coupling (720) arranged between the driving part (710) of the clutch (700) and a disk (714) which is axially fixed and rotationally locked with the driven shaft (801).

## Description

The present invention relates to an apparatus for transmitting a rotational movement at different speeds to a driven part.

It is known, for example in the technical sector relating to the cooling, in particular, of internal-combustion engines, that there exists the need to cool them by means of recirculation of a fluid moved by means of a corresponding recirculating pump, the impeller of which is rotated by a shaft operated by a pulley which is driven by a belt connected to the driving shaft.

It is also known that recirculation of the cooling fluid must be performed with a flowrate corresponding to the actual cooling requirement determined by the real operating and external temperature conditions, so as to avoid having to keep constantly and needlessly in operation at full speed devices which draw useful power, increasing the wear of the various component parts and the consumption levels of the vehicle.

It is also known that, in order to solve this problem, coupling devices of the friction clutch and eddy current type able to produce two different speeds of rotation, i.e. full speed and slow speed, of the pump shaft have been proposed.

These devices, however, have large axial dimensions and are complicated and costly to realize and in some solutions do not envisage the possibility of maintaining safety rotation (fail-safe mode) in the event of interruption and/or total failure of the power supply to the circuits for controlling the various operating devices.

The technical problem which is posed, therefore, is to provide an apparatus for transmitting the rotational movement to a driven shaft, in particular the shaft for operating the impeller of a pump for recirculating the cooling fluid of vehicles, which allows the pump to be operated at a number of revolutions equal to or different from that of the driving shaft and able to be determined depending on the actual cooling requirement of the engine.

In connection with this problem, it is also desirable that the apparatus should be able to ensure safety rotation of the impeller also in the case of malfunctioning of the associated control devices.

These technical problems are solved according to the present invention by an apparatus for transmitting the movement to a driven shaft according to the characteristic features of Claim 1.

Further details may be obtained from the following description of a non-limiting example of embodiment of the invention, provided with reference to the accompanying drawings in which:

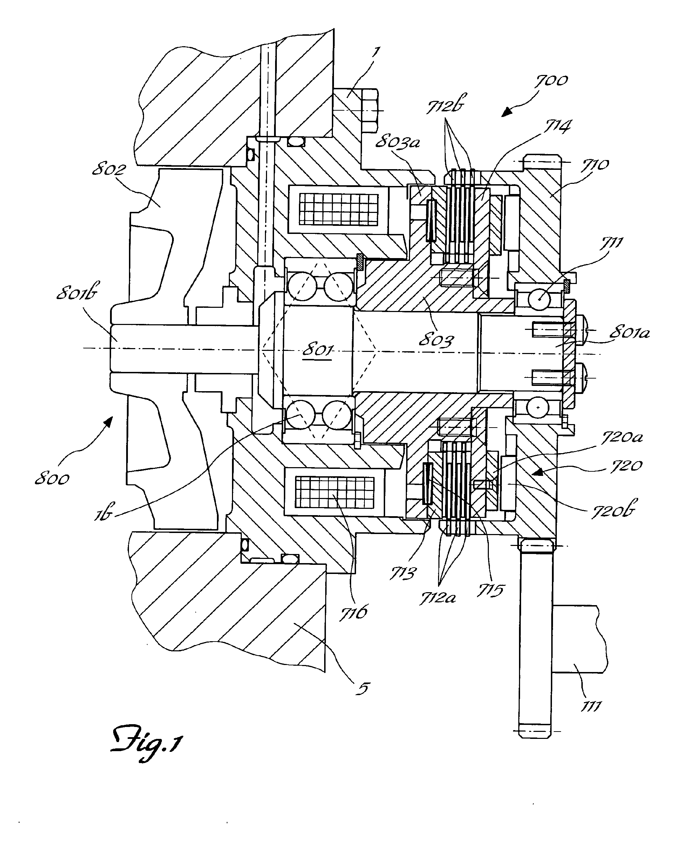

Figure 1: shows a schematic axially sectioned view of a preferred embodiment of the apparatus for transmitting the movement according to the present invention, applied to a vehicle pump.

As shown in Fig. 1, it is envisaged that the transmission apparatus according to the present invention is arranged between a driving shaft, denoted by 111, and a first end 801a of a driven shaft 801 which is mounted on a bearing 1b integral with a fixed structure 1 and the other end 801b of which carries, for example, the impeller 802 of a pump 800 for recirculating the fluid for cooling a vehicle schematically shown with a fixed part 5.

In greater detail, the apparatus comprises a bell member 710 mounted on a bearing 711 keyed onto the first end 801a of the shaft 800 and able to receive movement from the driving component 111 in order to form the driving part of a clutch 700 comprising multiple disks 712a,712b which are respectively joined to the said bell member and to a hub 803 which is rotationally locked with the shaft 800; the hub 803 has, fastened thereon, a disk 714 which is axially fixed and designed to form the axial stop for closing of the clutch 700.

The surface of the disk 714 directed towards the bell member 710 has, mounted thereon, permanent magnets 720a axially facing a conductive disk 720b integral with the said bell member 710, forming overall an eddy current or Foucault coupling 720.

The hub 803 also has, axially mounted thereon, but on the axially opposite side to the clutch, relative to the fixed disk 714, the armature 713 of the clutch which is movable axially in both directions on the same hub 803.

A Belleville washer 715 is axially arranged between the armature 713 and a radial flange 803a of the hub, said washer, which reacts against the said radial flange, keeping the armature 713 pushed towards the disk 714, closing the clutch 700.

The clutch 700 is completed by an electromagnet 716 which is arranged on the side of the flange 803a axially opposite to that of the armature 713 and is integral with the structure 1 fastened to the fixed part 5.

Excitation of the electromagnet is controlled by a control unit (not shown) connected to the temperature detection sensors.

With this configuration:
- the clutch 700 is kept mechanically closed by the resilient means 715 and consequently the shaft 800 is rotationally operated at a speed which is the same as that of the bell member 710 and therefore the driving shaft 111;
- should it be required to cause rotation of the pump at a smaller number of revolutions, the electromagnet 716 is activated so that, recalling the armature 713, it opens the clutch, causing transmission of the movement to the shaft 801 via the Foucault coupling 720 which, owing to relative slipping of the two parts, transmits to the shaft a smaller number of revolutions than that of the bell member.

In addition to this, it is pointed out how operation of the pump is ensured in safety conditions known as "fail safe mode" with rotation of the impeller at full speed owing to the fact that, even in the event of malfunctioning of the control means of the apparatus, the shaft 800 is in any case connected to the driving part 11 by means of the clutch 700 which is normally closed by the spring 715.

It is therefore clear how with the apparatus according to the invention it is possible to obtain rotational operation of the fan at two different speeds, one of which with operation in fail-safe mode, this being indispensable in the particular application relating to control of a pump for recirculating the cooling fluid of vehicles.

It is envisaged moreover that the driving shaft may be coaxial with the driven shaft.

## Claims

1. Apparatus for transmitting the movement from movement generating means (111) to a driven shaft (800) mounted idle on a bearing (1b), **characterized in that** it comprises:
- a clutch (700) with multiple disks (712a,712b), arranged between the driving part (111) and the driven shaft (801) and
- an eddy current or Foucault coupling (720) arranged between the driving part (710) of the clutch (700) and a disk (714) which is axially fixed and rotationally locked with the driven shaft (801).

2. Apparatus according to Claim 1, **characterized in that** the driving part of said clutch (700) comprises a bell member (710) mounted on a bearing (711) keyed onto the first end (801a) of the driven shaft (800), first multiple disks (712a) of the said clutch being fastened to said bell member.

3. Apparatus according to Claim 1, **characterized in that** the clutch (700) comprises second multiple disks (720b) fastened to a hub (803) mounted on the shaft (800) and rotationally locked with the latter.

4. Apparatus according to Claim 3, **characterized in that** an axially fixed disk (714) able to form the axial stop for closing of the clutch (700) is fastened on the hub (803).

5. Apparatus according to Claim 3, **characterized in that** the armature (713) of the clutch, movable axially in both directions on the hub (803), is mounted on the hub (803).

6. Apparatus according to Claim 5, **characterized in that** the armature (713) and a radial flange (803a) of the hub (803) have, axially arranged between them, a Belleville washer (715) able to keep the armature (713) axially pushed towards the disk (714) for closing of the clutch (700).

7. Apparatus according to Claim 6, **characterized in that** the clutch (700) comprises an electromagnet (716) arranged on the side of the flange (803a) axially opposite to that of the armature (713) and integral with a fixed structure (1).

8. Apparatus according to Claim 1, **characterized in that** said eddy current or Foucault coupling (720) comprises permanent magnets (720a) mounted on the surface of the disk (714) directed towards the bell member (710) and axially facing a conductive disk (720b) integral with the said bell member (710).

9. Apparatus according to Claim 1, **characterized in that** the driven shaft (801) is the shaft for operating the impeller (802) of a recirculating pump (800) for vehicles.

10. Apparatus according to Claim 1, **characterized in that** the driving shaft (111) is parallel to the driven shaft.

11. Apparatus according to Claim 1, **characterized in that** the driving shaft (111) is coaxial with the driven shaft.
